# EUROPÄISCHE PATENTSCHRIFT

(11) **EP 1 520 986 B1**
(45) Veröffentlichungstag und Bekanntmachung des Hinweises auf die Patenterteilung: **18.05.2005**
(21) Anmeldenummer: 03022082.6
(22) Anmeldetag: 02.10.2003
(51) Int. Cl.: F04B 11/00, F16L 55/054, F16L 55/052

(54) **Windkessel**
Pneumatic surge chamber
Accumulateur à gaz

(43) Veröffentlichungstag der Anmeldung: 06.04.2005
(73) Patentinhaber: Feluwa Pumpen GmbH, 54570 Mürlenbach (DE)
(72) Erfinder: Nägel, Heinz M., 54550 Daun (DE); Gutzeit, Theodor, 54655 Wilsecker (DE)
(74) Vertreter: Paul, Dieter-Alfred, Dipl.-Ing.

(56) Entgegenhaltungen:
- DE-A- 2 505 856
- DE-A- 4 031 239
- DE-C- 962 769
- US-A- 3 874 417

## Beschreibung

Die vorliegende Erfindung betrifft einen Windkessel zum Ausgleich von Druckschwankungen in den Förderleitungen von oszillierend wirkenden Verdrängerpumpen und dergleichen nach dem Oberbegriff von Anspruch 1.

Schlauchmembran-Windkessel dieser Art sind bekannt und werden in der Praxis hinter oszillierenden Verdrängerpumpen eingesetzt, um Druckschwingungen, die in Folge der sich periodisch ändernden Kolbengeschwindigkeiten der Pumpen auftreten, entgegenzuwirken. Diese Windkessel weisen eine von dem zu fördernden Medium durchströmte Schlauchmembran auf, welche in einem rohrförmigen Gehäuse untergebracht ist und sich an Volumenänderungen des Medienstroms aufgrund von Druckschwankungen anpassen kann. Im Falle einer Vergrößerung des Volumens des Verdrängungsraums wird dabei Vorlageflüssigkeit, welche in dem die Schlauchmembran umgebenden Ringraum enthalten ist, in den damit verbundenen Druckbehälter gedrückt, und im umgekehrten Fall einer Verkleinerung des Verdrängungsraumes wird das sich vergrößernde Ringraumvolumen mit Vorlageflüssigkeit aus dem Druckbehälter gefüllt. Diese Fluidströme zwischen dem Ringraum und dem Druckbehälter werden dabei durch die mit einem Gas gefüllte Blase, welche in dem Druckbehälter innerhalb der Vorlageflüssigkeit liegt, abgedämpft.

Diese Art der Dämpfung setzt voraus, daß die Volumina der Gasblase und der Vorlageflüssigkeit genau aufeinander abgestimmt sind. Des weiteren muß auch der Druck innerhalb der Blase an den Druck des zu fördernden Mediums angepaßt sein. Bei einem annähernd gleichförmigen Mediumsdruck wird der Innendruck der Blase so eingestellt, der etwa dem 0,8-fachen des Mediumdrucks entspricht.

Probleme können jedoch bei stark wechselnden Mediumsdrükken im Betrieb auftreten. Wenn beispielsweise der Mediumsdruck zu klein im Sinne der Haupteinstellung des Gasdruckes wird, ist nur eine geringe oder zum Teil gar keine Dämpfungswirkung vorhanden, weil sich mit dem sinkenden Mediumsdruck das Blasenvolumen vergrößert, so daß der Druck darin absinkt. Ist hingegen der Mediumsdruck zu hoch, erfolgt die Dämpfung ebenfalls nicht optimal, weil das Arbeitsvolumen der Blase zu klein ist.

Die DE 40 31 239 A offenbart einen Druckbehälter, dessen Blase mit einem Detektor versehen ist, wobei der Detektor mit einem Entlastungsventil und einem Füllventil derart gekoppelt ist, daß ein Schrumpfen der Blase zu einer Nachfüllung über das Füllventil, und eine Ausdehung der Blase eine Entleerung über das Entlastungsventil zur Folge hat.

Aufgabe der vorliegenden Erfindung ist es, einen Windkessel der eingangs genannten Art so auszugestalten, daß mit geringem Aufwand eine zuverlässige Dämpfung auch bei wechselnden Mediumsdrücken erfolgen kann.

Diese Aufgabe ist erfindungsgemäß bei einem Windkessel der eingangs genannten Art durch die kennzeichnenden Merkmale von Anspruch 1 gelöst.

Der Erfindung liegt damit die Überlegung zugrunde, Volumenänderungen der mit Gas gefüllten Blasen in dem Druckbehälter, welche über ein vorgegebenes Maß hinaus gehen, weitgehend zu unterbinden, indem automatisch Gas nachgefüllt wird, wenn das Volumen der Blase zu klein wird, und im umgekehrten Fall Gas aus der Blase abgelassen wird, wenn das Volumen der Blase zu groß wird. Damit kann das Volumen der Gasblase in einem vorgegebenen Arbeitsbereich gehalten werden, so daß der erfindungsgemäße Windkessel auch bei sich ändernden Drücken in dem zu fördernden Medium stets optimal arbeitet.

Dazu sind die Detektoren mit dem Entlastungsventil und dem Füllventil in der Weise gekoppelt, daß bei einer Detektion der oberen Ventil-Endstellung das Füllventil zum Nachfüllen von Gas in die Blase und bei Erreichen der unteren Ventil-Endstellung das Entlastungsventil zum Auslassen von Gas aus der Blase betätigt wird.

Erfindungsgemäß wird damit in einfacher Weise die Stellung des Ventils zur Erkennung von unzulässigen Volumina der Gasblase herangezogen. Dieses wird durch die Feder in ständigem Kontakt mit der Blase gehalten, so daß jede Ventilstellung einem definierten Blasenvolumen entspricht. Somit kann dem Ventil ein dem zulässigen Blasenvolumenbereich entsprechender Arbeits- oder Bewegungsbereich mit einer oberen und einer unteren Endstellung zugeordnet werden, in dem sich das Ventil bewegen darf. Wenn das Ventil die obere Endstellung überschreitet, bedeutet dies, daß die Blase ihr zulässiges minimales Volumen unterschritten hat und Gas nachgefüllt werden muß. Wenn in umgekehrter weise von der Blase unter die zulässige untere Endstellung gedrückt wird, bedeutet dies, daß das Volumen der Blase zu groß ist und entsprechend Gas abgelassen werden muß, um das Blasenvolumen wieder zu reduzieren.

In weiterer Ausgestaltung dieser Ausführungsform können die Detektoren vorzugsweise die Stellung des unteren Endes des Ventilstößels bzw. eines damit gekoppelten Gebers überwachen. Diese Ausführungsform hat den Vorteil, daß Detektoren nicht in dem Druckbehälter selbst angeordnet zu sein brauchen. Vielmehr ist es möglich, den Ventilstößel bzw. den damit gekoppelten Geber aus dem Windkessel herauszuführen und dort mittels geeigneter Lagedetektoren wie beispielsweise einem oberen und einem unteren Grenzwertgeber zu überwachen.

Selbstverständlich ist es möglich, die Detektoren unmittelbar mit dem Entlastungsventil und dem Füllventil zu koppeln. Gemäß einer bevorzugten Ausführungsform ist jedoch eine Steuerung beispielsweise in der Form eines Computers vorgesehen, an welche die Detektoren einerseits und die Ventile andererseits angeschlossen sind. Eine solche Steuerung hat den Vorteil, daß auch zeitliche Komponenten bei der Regulierung des Blasenvolumens berücksichtigt werden können. So können beispielsweise kurzzeitige Über- bzw. Unterschreitungen der vorgegebenen Grenzwerte, die auf Meßfehler oder dergleichen zurückgeführt werden können, außer Acht gelassen werden, indem das Füllventil und Entlastungsventil nur dann betätigt werden, wenn eine unzulässige Überschreitung der Grenzwerte eine gewisse Zeit andauert. Des weiteren können Grenzwertereignisse in Größe und Häufigkeit überwacht werden. Die Erfassung kann dann programmgemäß zu einer Festlegung bzw. Veränderung einer Zeitvariablen für eine getaktete Entlastung oder Befüllung - je nach Überschreitungsgröße der gesetzten Grenzwertgröße - verwendet werden. Im übrigen kann die Steuerung fernwirkfähig sein und somit auch einen Zugriff auf die Daten der Auswertung sowie eine Veränderung der Programminhalte des Steuerprogramms erlauben.

Des weiteren kann ein Druckaufnehmer zur Erfassung des Vorlageflüssigkeitsdrucks vorgesehen und mit der Steuerung verbunden sein. Auf diese Weise kann die Steuerung eine Überwachung der erzielten Dämpfung vornehmen.

In gleicher weise kann auch ein Druckaufnehmer zur Erfassung des Blaseninnendruck vorgesehen und mit der Steuerung verbunden sein, so daß Funktionsfehler auch anhand des Gasdruckes in der Blase überprüft werden können.

Schließlich kann die Steuerung in Form des Computers mit externen Auswertegeräten wie beispielsweise weiteren Computern in einem Netz verbunden sein. Insbesondere ist eine Fernwartung möglich.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: in schematischer Darstellung einen Windkessel gemäß der vorliegenden Erfindung nebst Peripheriegeräten,
- Figur 2: einen Windkessel gemäß der vorliegenden Erfindung im Längsschnitt und
- Figur 3: eine alternative Ausführungsform eines erfindungsgemäßen Windkessels im Längsschnitt.

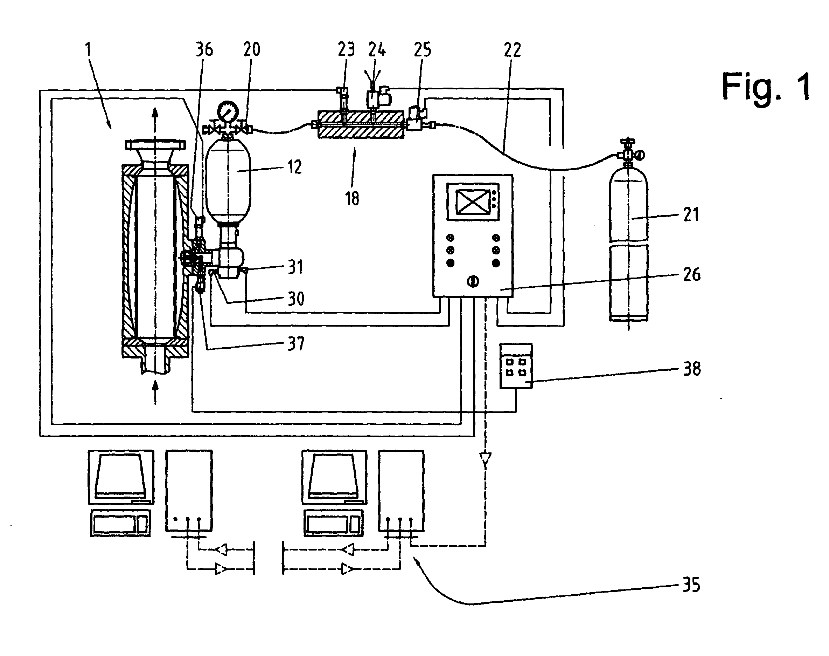

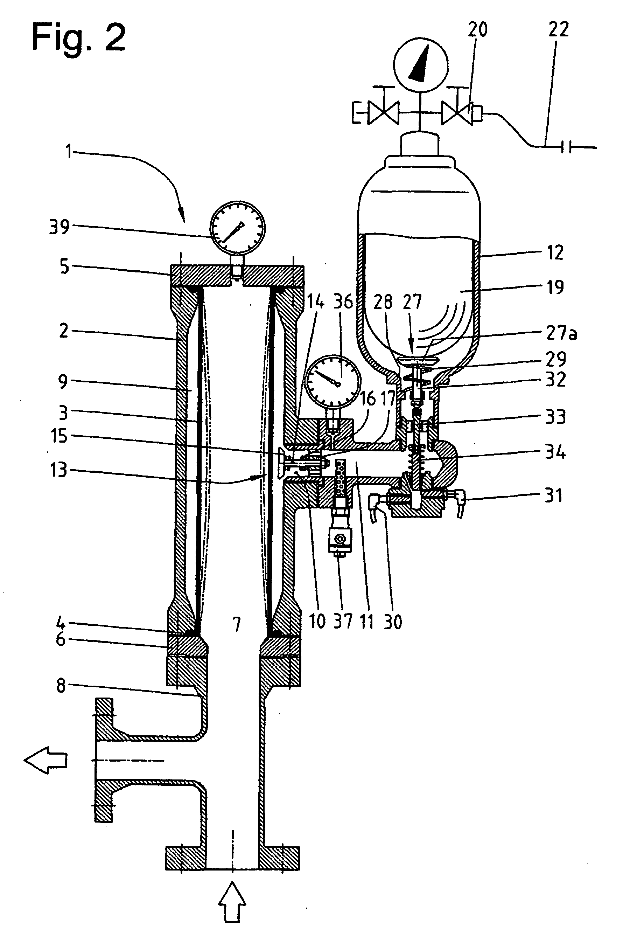

In den Figuren 1 und 2 ist ein Windkessel 1 gemäß der vorliegenden Erfindung dargestellt, welcher beispielsweise hinter oszillierenden Verdrängerpumpen zur Verringerung von auftretenden Druckschwingungen eingesetzt wird. Wie insbesondere in der Figur 2 gut erkennbar ist, besitzt der Windkessel 1 ein längliches und rohrförmiges Gehäuse 2, in dem eine Schlauchmembran 3 angeordnet ist, die sich über die gesamte Gehäuselänge erstreckt und über endseitig vorgesehene Wulstringe 4 in dem Gehäuse 2 festgespannt ist. Hierzu ist das Gehäuse 2 an seinem einen Endbereich mit einem Deckel 5 verschlossen und an seinem anderen Endbereich mit einem Befestigungsflansch 6 versehen. Die Schlauchmembran 3 definiert innenseitig einen Verdrängungsraum 7 für das zu fördernde Medium bzw. Fluid, welcher an seinem oberen Ende durch den Deckel 5 verschlossen und an seinem unteren Ende an ein T-Leitungsstück 8 einer ansonsten nicht näher dargestellten Rohrleitung angeschlossen ist. An ihrer Außenseite bildet die Schlauchmembran 3 mit der Gehäusewandung einen Ringraum 9, welcher über eine Öffnung 10 in der Gehäusewandung und eine Leitung 11 mit einem Druckbehälter 12 unter Bildung eines mit einer Vorlageflüssigkeit gefüllten Hydraulikmittelraums verbunden ist. In die Leitung 11 ist ein Rückschlagventil 13 eingebaut. Dieses Ventil 13 weist einen Schaft 14 mit einem Ventilteller 15 auf, welcher der Schlauchmembran 3 zugekehrt ist und unter der Wirkung einer Druckfeder 16 steht. Der Schaft 14 ist längsverschiebbar gelagert und mittels eines Anschlags 17 in der Axialbewegung in Richtung zu der Schlauchmembran 3 begrenzt. Der Ventilteller 15 weist bevorzugt eine Kegelform auf, die mit einer konischen Sitzfläche, welche um die Öffnung 10 herum vorgesehen ist, zusammengreifen kann. Wenn sich die Schlauchmembran 3 im Betrieb zu weit ausdehnt, verschließt der Ventilteller 15 die Öffnung 10, so daß die Schlauchmembran 3 nicht in die Öffnung 10 hineingeraten kann.

In bekannter Weise ist der Druckbehälter 12 teilweise mit der Vorlageflüssigkeit und im übrigen mit einer Blase 19 aus einem elastischen Material gefüllt, die mit einem unter Druck stehenden Gas wie beispielsweise Stickstoff gefüllt ist. Am oberen Ende des Druckbehälters 12 ist ein Anschluß 20 vorgesehen, der die Blase 19 mit einer Gasquelle 21 für das unter Druck stehende Gas - hier eine Stickstofflasche - über eine Leitung 22 verbindet. In die Leitung sind vom Anschluß 20 des Druckbehälter 12 in Richtung der Gasquelle 21 hintereinander ein Blaseninnendruckaufnehmer 23, ein Entlastungsventil 24 und - am nächsten zur Gasquelle 21 liegend - ein Füllventil 25 vorgesehen, wobei der Aufnehmer 23 und die Ventile 24, 25 zu einem Block 18 zusammengefaßt sind.

In dem Druckbehälter 12 ist ein Rückschlagventil 27 vorgesehen, über welches die bodenseitige Öffnung des Druckbehälters 12 zu der Verbindungsleitung 11 hin verschlossen werden kann. Das Ventil 27 besitzt einen Ventilteller 27a, der an seiner Unterseite kegelig ausgeführt ist und mit einem Ventilsitz 28 zum Veschließen der Öffnung zusammenwirkt und der mittels einer Schraubendruckfeder 29, welche sich an einer Führungshalterung des Druckbehälters 12 für das Ventil 27 abstützt, nach oben gegen die Blase 19 gedrückt wird. Das Ventil 27 wird über ein an seiner Unterseite vorgesehenes Ventilstößel 32 in den Druckbehälter 12 geführt, wobei das untere Ende des Ventilstößels über eine Zwischenwelle 33 mit einem Geber 34 verbunden ist.

Die Position des unteren Geberendes wird durch zwei Grenzwertschalter in Form von induktiven Sensoren 30, 31 überwacht. Die Sensoren 30, 31 definieren dabei einen zulässigen Arbeitsbereich, in dem sich der Geber 34 und damit das Ventil 27 bewegen kann, wobei der in der Zeichnung linke Sensor 30 eine untere Endlage des Arbeitsbereiches und der rechte Sensor 31 eine obere Endlage des Arbeitsbereiches definiert und überwacht. Dabei entspricht die untere Endstellung des Arbeitsbereiches einer zulässigen maximalen Ausdehnung der Blase 19 und die obere Endstellung des Arbeitsbereiches einer zulässigen minimalen Ausdehnung der Gasblase 19. Die Sensoren 30, 31 sind über eine Steuerung 26 in Form eines Computers mit dem Entlastungsventil 24 und dem Füllventil 25 gekoppelt, um bei Erreichen der unteren Ventil-Endstellung, die der maximal zulässigen Ausdehnung der Blase 19 entspricht, das Entlastungsventil 24 zu betätigen und auf diese Weise Gas aus der Blase 19 abzulassen, so daß sich deren Volumen verkleinert, und im umgekehrten Fall, daß die obere Ventil-Endstellung erreicht wird, welche dem kleinsten zulässigen Volumen der Blase 19 entspricht, das Füllventil 25 zu betätigen und der Blase 19 Gas aus der Gasquelle 21 zuzuführen. Um hierbei Betätigungen der Ventile 24, 25 aufgrund von Meßungenauigkeiten etc. auszuschließen, betätigt die Steuerung 26 die Ventile 24, 25 nach Erhalt der Signale von den Sensoren 30, 31 mit einer vorgegebenen Verzögerung, d.h. erst dann, wenn sie über einen vorgegebenen Zeitraum kontinuierlich die Signale von den Sensoren 30, 31 erhält.

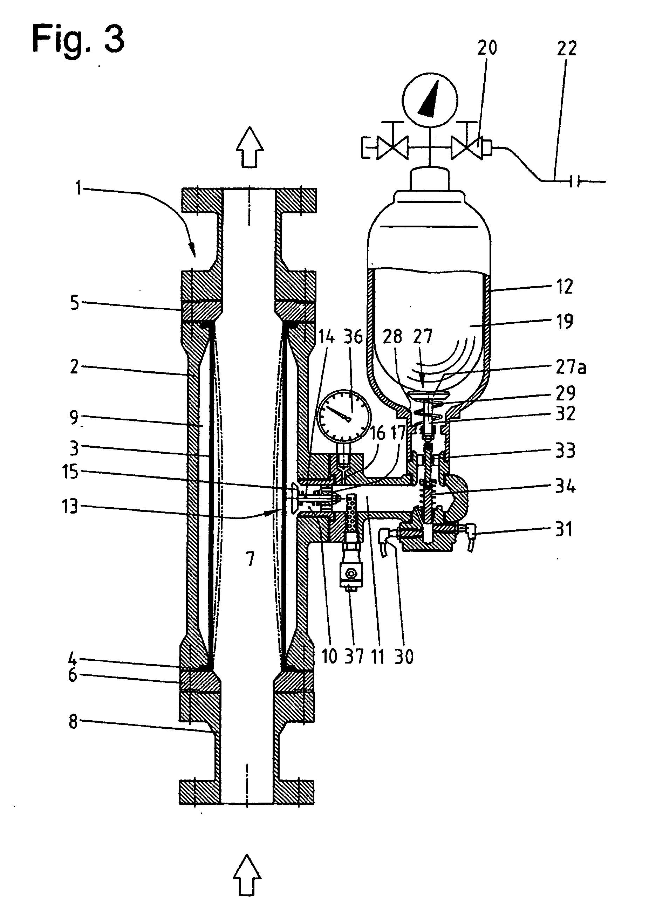

An die Verbindungsleitung 11 zwischen dem Ringraum 9 des Windkessels 1 und dem Druckbehälter 12 ist weiterhin ein Druckaufnehmer 36 zur Erfassung des Drucks der Vorlageflüssigkeit angeschlossen, der mit der Steuerung 26 verbunden ist, so daß der Druck der Vorlageflüssigkeit und damit auch die erzielten Dämpfungseffekte von der Steuerung 26 überwacht werden können. Der Druckaufnehmer ist in den Figuren 1 und 2 als Manometer und in Figur 3 als Drucktransmitter dargestellt. Des weiteren ist an die Verbindungsleitung 11 eine Schlauchbruchsonde 37 angeschlossen und mit einer entsprechenden Auswerteeinheit 38 verbunden. Solche Schlauchbruchsonden sind hinlänglich bekannt, so daß auf eine eingehende Erläuterung der Funktionsweise an dieser Stelle verzichtet werden soll.

In gleicher Weise ist der Druckaufnehmer 23 an die Gasleitung 22 angeschlossen und mit der Steuerung 26 verbunden, um den Innendruck der Blase 19 zu überwachen.

Schließlich ist an dem Deckel 5 des Gehäuses 2 ein Manometer 39 vorgesehen, um den Druck in dem verdrängungsraum 7 anzuzeigen.

Im Betrieb wird aufgrund der oszillierenden Bewegung einer Verdrängerpumpe, welche dem Windkessel 1 vorgeschaltet ist, pulsierend das zu fördernde Medium in den Verdrängungsraum 7 gefördert und anschließend wieder daraus abgezogen. Während des Druckhubes der Pumpe weitet sich die Schlauchmembran 3 unter Vergrößerung des verdrängungsraums 7 auf, so daß die Vorlageflüssigkeit aus dem Ringraum 9 in den Druckbehälter 12 gepumpt wird und das Gas der Blase 19 zusammenpreßt, und damit eine Drucksteierung des Gases bewerkstelligt. Anschließend wird im Zuge eines Saughubes der Verdrängerpumpe die Gasblase druckmäßig entlastet durch eine Abströmung der Vorlageflüssigkeit aus dem Druckbehälter 12 in den Ringraum 9. Dies bewirkt eine Nachförderung des Fördermediums aus dem Verdrängungsraum 7. Diese zyklischen Druckschwankungen werden durch die mit Gas gefüllte Gasblase 19 im Druckbehälter 12 abgedämpft. Hierzu ist der Gasdruck in der Blase 19 auf einen vorgegebenen Standard-Arbeitsdruck des zu fördernden Mediums abgestimmt. Wenn nun im Betrieb der tatsächliche Druck in dem zu fördernden Medium stark von dem Standard-Arbeitsdruck, abweicht, erfolgt bei dem erfindungsgemäßen Windkessel eine automatische Anpassung. Für den Fall, daß der Mediumsdruck abfällt, vergrößert sich entsprechend das Volumen der Blase 19. Wenn dies dazu führt, daß das Ventil 27 durch die Blasenausdehnung so weit entgegen der Rückstellkraft der Feder 29 unter die untere Endstellung des Arbeitsbereiches abgesenkt wird, erfolgt eine Aktivierung des linken Sensors 30 für die untere Endstellung. Aufgrund eines Signals des Sensors 30 wird dann die Steuerung 26 das Entlastungsventil 24 aktivieren, um Gas aus der Blase 19 abzulassen, so daß sich das Volumen der Blase 19 wieder verringert mit der Folge, daß das Ventil 27 durch die Rückstellkraft der Feder 29 angehoben wird und das untere Ende des Gebers 34 den Bereich des Sensors 30 verläßt. Sofern im umgekehrten Fall der Mediumsdruck sich stark erhöht, führt dies dazu, daß sich mehr Vorlageflüssigkeit als in der Standard-Einstellung innerhalb des Druckbehälters 12 befindet mit der Folge, daß sich das Volumen der Blase 19 verringert und entsprechend das Ventil 27 durch die Rückstellkraft der Feder 29 nach oben bewegt wird. Wenn es dabei die obere Endstellung überschreitet, verläßt das untere Ende des Gebers 34 den Bereich des Sensors 31, so daß dieser ein entsprechendes Signal an die Steuerung 26 abgibt mit der Folge, daß das Füllventil 25 betätigt wird, um Gas aus der Gasquelle 21 in die Blase 19 nachzufüllen, so daß sich deren Volumen vergrößert und das Ventil 27 niedergedrückt wird. Bei dem erfindungsgemäßen Windkessel findet somit eine automatische Anpassung des Blasenvolumens statt, so daß eine einwandfreie Dämpfung auch bei unterschiedlichen Mediumsdrücken erzielt werden kann.

In der Figur 3 ist eine weitere Ausführungsform eines erfindungsgemäßen Windkessels 1 dargestellt. Diese unterscheidet sich von der in Figur 2 dargestellten Ausführungsform nur darin, daß das Gehäuse 2 einen an seinen beiden Enden offenen Strömungskanal bildet und nicht an seinem oberen Ende geschlossen ist.

## Patentansprüche

1. Windkessel zum Ausgleich von Druckschwankungen in den Förderleitungen von oszillierend wirkenden Verdrängerpumpen und dergleichen mit
einem Gehäuse (2),
einer in dem Gehäuse (2) angeordneten Schlauchmembran (3), welche innenseitig einen Verdrängungsraum (7) für das zu fördernde Medium und außenseitig zusammen mit der Gehäusewandung einen mit einer Vorlageflüssigkeit gefüllten Ringraum (9) definiert, und
einem Druckbehälter (12), der teilweise mit der Vorlageflüssigkeit gefüllt und mit dem Ringraum (9) verbunden ist, wobei in dem Druckbehälter (12) zusätzlich zu der Vorlageflüssigkeit eine Blase (19) vorgesehen ist, die über ein Füllventil (25) mit einem Gas befüllbar und mit einem Entlastungsventil (24) zum Ablassen des Gases verbunden ist, und wobei in dem Bodenbereich des Druckbehälters (12) ein Ventil (27) angeordnet ist, um die Fluidverbindung zu dem Ringraum (9) zu unterbrechen, welches durch eine Feder (29) in seine geöffnete Position gedrückt wird und durch die sich aufweitende Blase (19) in seine geschlossene Stellung gebracht werden kann,
**dadurch gekennzeichnet, daß** dem Ventil (27) ein Arbeitsbereich mit einer dem unteren Grenzwert für die Blasenausdehnung entsprechenden oberen Endstellung und einer dem oberen Grenzwert für die Blasenausdehnung entsprechenden unteren Endstellung zugeordnet ist und Detektoren (30, 31) vorgesehen sind, um zu erfassen, wenn das Ventil (27) die obere bzw. die untere Endstellung erreicht, wobei die Detektoren (30, 31) mit dem Entlastungsventil (24) und dem Füllventil (25) in der Weise gekoppelt sind, daß bei einer Detektion der oberen Endstellung das Füllventil (25) zum Nachfüllen von Gas in die Blase (19) und bei Erreichen der unteren Endstellung das Entlastungsventil (24) zum Auslassen von Gas aus der Blase (19) betätigt wird.

2. Windkessel nach Anspruch 1, **dadurch gekennzeichnet, daß** die Detektoren (30, 31) die Stellung des unteren Endes des Ventilstößels (32) bzw. eines damit gekoppelten Gebers (34) überwachen.

3. Windkessels nach Anspruch 1 oder 2, **dadurch gekennzeichnet, daß** eine Steuerung (26) vorgesehen ist, durch welche die Detektoren (30, 31) mit dem Entlastungsventil (24) und dem Füllventil (25) verbunden sind.

4. Windkessel nach Anspruch 3, **dadurch gekennzeichnet, daß** die Steuerung (26) nach Erhalt von Signalen der Detektoren (30, 31), die entsprechende Steuersignale nur mit einer vorgegebenen Verzögerung an das Entlastungsventil (24) und das Füllventil (25) abgibt.

5. Windkessel nach Anspruch 3 oder 4, **dadurch gekennzeichnet, daß** ein Druckaufnehmer (36) zur Erfassung des Vorlageflüssigkeitsdrucks vorgesehen und mit der Steuerung (26) verbunden ist.

6. Windkessel nach einem der Ansprüche 3 bis 5, **dadurch gekennzeichnet, daß** ein Druckaufnehmer (23) zur Erfassung des Blaseninnendrucks vorgesehen und mit der Steuerung (26) verbunden ist.

7. Windkessel nach einem der Ansprüche 3 bis 6, **dadurch gekennzeichnet, daß** die Steuerung (26) eine Auswerteeinheit besitzt, um die Signale der Detektoren (30, 31) und/oder der Druckaufnehmer (23, 36) auszuwerten.

8. Windkessel nach einem der Ansprüche 3 bis 7, **dadurch gekennzeichnet, daß** die Steuerung (26) programmgesteuert ist.

9. Windkessel nach einem der Ansprüche 3 bis 8, **dadurch gekennzeichnet, daß** die Steuerung (26) fernwirkfähig ist und somit einen Zugriff auf die Daten der Auswertung und gegebenenfalls eine Veränderung der Programminhalte des Steuerprogrammes erlaubt.

## Claims

1. Pneumatic surge chamber for compensating pressure variations in the conveyor conduits of oscillatingly acting reciprocating and rotary pumps and the like including
a housing (2),
a tubular hose (3) arranged in the housing (2) and defining at its interior side a displacement chamber (7) for the fluid to be delivered and further defining at its exterior side together with the housing wall a ring chamber (9) which is filled with a feed fluid, and
a pressure vessel, which is partially filled with the feed fluid and connected to the ring chamber (9), wherein the pressure vessel (12) includes in addition to the feed fluid a balloon (19), which is inflatable by means of an inflation valve (25) with a gas and is connected with a relief valve (24) to deflate the gas, and wherein a valve (27) is provided in the bottom portion of the pressure vessel (12) for interrupting the fluid connection to the ring chamber (9), said valve (27) being urged into its opened position by means of a spring (29) and can be transferred into its closed position by the expanding balloon (19),
**characterized in that** the valve (27) has associated thereto an operative range with an upper final position corresponding to the lower limit for the expansion of the balloon and a lower end position corresponding to the upper limit for the balloon expansion, and detectors (30, 31) are provided for detecting, when the valve (7) reaches the upper and lower end positions, respectively, wherein the detectors (30, 31) are coupled with the relief valve (24) and the inflation valve (25) in such a way, that the inflation valve (5) is actuated in order to refill gas into the balloon (19) when the upper end position is detected and the relief valve (24) is actuated in order to deflate gas from the balloon (19), when the lower end position is reached.

2. Pneumatic surge chamber according to claim 1, **characterized in that** the detectors (30, 31) survey the position of the lower end of the valve stem (32) or a transmitter (34) coupled thereto.

3. Pneumatic surge chamber according to claim 1 or 2, **characterized in that** a controller (26) is provided, which connects the detectors (30, 31) with the relief valve (24) and the inflation valve (25).

4. Pneumatic surge chamber according to claim 3, **characterized in that** after receipt of signals from the detectors (30, 31) the controller (26) outputs corresponding command signals only with a predetermined delay to the relief valve (24) and the inflation valve (25).

5. Pneumatic surge chamber according to claim 3 or 4, **characterized in that** a pressure sensor (36) for detecting the pressure of the feed fluid is provided and connected to the controller (26).

6. Pneumatic surge chamber according to any of claims 3 to 5, **characterized in that** a pressure sensor (23) for detecting the inner pressure of the balloon is provided and connected to the controller (26).

7. Pneumatic surge chamber according to any of the claims 3 to 6, **characterized in that** the controller (26) comprises an evaluation unit in order to evaluate the signals from the detectors (30, 31) and/or the pressure sensors (23, 36).

8. Pneumatic surge chamber according to any of the claims 3 to 7, **characterized in that** the controller (26) is program-controlled.

9. Pneumatic surge chamber according to any of the claims 3 to 8, **characterized in that** the controller (26) is tele-controllable and accordingly allows access to the data of the evaluation and possibly a change of the program content of the control program.

## Revendications

1. Réservoir à air pour l'équilibrage des variations de pre ssion dans les conduites d'alimentation de pompes volumétriques fonctionnant de façon oscillante et quelque chose de similaire avec :
un boîtier (2),
une membrane tubulaire (3) disposée dans le boîtier (2), laquelle membrane définit du côté intérieur un chambre de refoulement (7) pour le médium qui doit être transporté et, du côté extérieur, ensemble avec la paroi de boîtier, une chambre annulaire (9), remplie d'un liquide accumulé, et
un réservoir sous pression (12) rempli partiellement avec le liquide accumulé et relié à la chambre annulaire (9) ; une bulle (19) étant prévue en plus du liquide accumulé dans le réservoir sous pression (12), laquelle bulle est s u-sceptible d'être remplie via une soupape de remplissage (25) par un gaz et est reliée à une soupape de décharge (24) pour laisser s'échapper le gaz et, où une soupape (27) est disposée dans la zone de fond du réservoir sous press ion (12) pour interrompre la liaison de fluide vers la chambre annulaire (9), laquelle soupape est poussée par un ressort (29) dans sa position ouverte et la bulle (19) s'élargissant pouvant amener laquelle soupape dans sa position fermée,
**caractérisé en ce qu'**on a associé à la soupape (27) une zone de travail avec une position terminale supérieure correspondant à la valeur limite inférieure pour la dilatation de la bulle et une position terminale inférieure correspo n-dant à la valeur limite supérieure pour la dilatation de la bulle, et **en ce que** l'on a prévu des détecteurs (30, 31) pour déterminer le moment où la soupape (27) atteint la position terminale supérieure, respectivement inférieure; les détecteurs (30, 31) étant couplés à la soupape de décharge (24) et à la soupape de remplissage (25) de manière à pouvoir actionner la soupape de remplissage (25) lors d'une détection de la position terminale supérieure, pour remplir du gaz dans la bulle (19) et pour pouvoir actionner la soupape de décharge (24) et laisser s'échapper le gaz de la bulle (19) une fois la position terminale inférieure atteinte.

2. Réservoir à air selon la revendication 1, **caractérisé en ce que** les détecteurs (30, 31) surveillent la position de l'extrémité inférieure du poussoir de soupape (32), respectivement d'un capteur (34) couplé audit poussoir de soupape.

3. Réservoir à air selon la revendication 1 ou 2, **caractérisé en ce qu'**on a prévu une commande (26) grâce à laquelle les détecteurs (30, 31) sont reliés à la soupape de décharge (24) et à la soupape de remplissage (25).

4. Réservoir à air selon la revendication 3, **caractérisé en ce que** la commande (26) émet les signaux de commande correspondants, après la réception des signaux provenant des détecteurs (30, 31), vers la soupape de décharge (24) et vers la soupape de remplissage (25), uniquement avec un retard prédéte r-miné.

5. Réservoir à air selon la revendication 3 ou 4, **caractérisé en ce qu'**on a prévu un capteur de pression (36) pour la détection de la pression du liquide accumulé et que ledit capteur de pression est relié à la commande (26).

6. Réservoir à air selon une des revendications 3 à 5, c aractérisé en ce qu'on a prévu un capteur de pression (23) pour la détection de la pression interne de la bulle et que ledit capteur de pression est relié à la commande (26).

7. Réservoir à air selon une des revendications 3 à 6, **caractérisé en ce que** la commande (26) possède une unité d'évaluation destinée à évaluer les signaux des détecteurs (30,31) et /ou des capteurs de pression (23, 36).

8. Réservoir à air selon une des revendications 3 à 7, **caractérisé en ce que** la commande (26) est commandée par un programme.

9. Réservoir à air selon une des revendications 3 à 8, c aractérisé en ce que la commande (26) est capable d'agir à distance et permet ainsi un accès aux données d'évaluation et si besoin est, de modifier les contenus de programme du programme de commande.
